Europäisches Patentamt

European Patent Office

Office européen des brevets

(11) Veröffentlichungsnummer: **0 067 967**
**A2**

(12) # EUROPÄISCHE PATENTANMELDUNG

(21) Anmeldenummer: 82104457.5

(22) Anmeldetag: 21.05.82

(51) Int. Cl.³: **F 02 F 3/00**
**F 16 J 1/00**

(30) Priorität: 24.06.81 DE 3124791

(43) Veröffentlichungstag der Anmeldung:
29.12.82 Patentblatt 82/52

(84) Benannte Vertragsstaaten:
DE FR GB IT NL SE

(71) Anmelder: MTU MOTOREN- UND TURBINEN-UNION
MÜNCHEN GMBH
Dachauer Strasse 665 Postfach 50 06 40
D-8000 München 50(DE)

(72) Erfinder: Hüther, Werner, Dr.-Ing.
Nikolaus-Lenau-Strasse 8
D-8047 Karlsfeld(DE)

(54) Kolben, insbesondere eines Verbrennungsmotors, mit Kolbenbolzen und Kraftübertragungsglied.

(57) Die Erfindung bezieht sich auf einen Kolben, insbesondere eines Verbrennungsmotors, mit Kolbenbolzen und dort angreifendem Kraftübertragungsglied, besonders Pleuelstange. Der Kolbenbolzen wird stark durchgebogen, so daß hauptsächlich die Lagerkanten beim Kraftübertragungsglied-Ende tragen. Diese Durchbiegung ist einer der Gründe, die einer Leistungssteigerung des Motors entgegenstehen. Auch hat zu starke Durchbiegung zur Folge, daß der Ölfilm herausgequetscht wird. Zur Vermeidung oder Verminderung solcher Nachteile sind erfindungsgemäß mindestens eine Zwischenabstützung des Kolbenbolzens und ein bzw. jeweils ein dortiger beidseitiger Angriff des Kraftübertragungsglieds am Kolbenbolzen vorgesehen. Insbesondere ist eine von der Umfangswand und/oder dem Boden des Kolbens getragene Zwischenabstützeinrichtung vorgesehen. Vorzugsweise ist das genannte Ende gegabelt, ferner der Kolbenbolzen in der Zwischenstütze geteilt. Insbesondere bestehen alle genannten Teile aus Keramik.

EP 0 067 967 A2

Croydon Printing Company Ltd.

wo/si

MTU MOTOREN- UND TURBINEN-UNION
MÜNCHEN GMBH


München, den 15. Juni 1981


Kolben, insbesondere eines Verbrennungsmotors, mit Kolbenbolzen und Kraftübertragungsglied

Die Erfindung bezieht sich auf einen Kolben, insbesondere eines Verbrennungsmotors, mit Kolbenbolzen und dort angreifendem Kraftübertragungsglied.

Der Gegenstand dieses Oberbegriffs des Anspruchs 1 ist allgemein bekannt. Das Kraftübertragungsglied auf dem quer durch den Kolben verlaufenden Kolbenbolzen ist insbesondere eine Pleuelstange (Schubstange, Kurbelstange, Treibstange) oder ein Pleuel, die bzw. das also die geradlinige Hin- und Herbewegung des Kolbens in eine Drehbewegung umwandelt bzw. umgekehrt, kann aber auch z.B. eine geradlinig hin- und herbewegbare Kolbenstange sein. Die vorliegende Problematik wird im folgenden bei einem Kolben eines Verbrennungsmotors und einem Pleuel dargelegt. Sie gilt aber auch allgemein bei einem Kolben und einem anderen Kraftübertragungsglied auf dem Kolbenbolzen.

Bei dem Kolbenbolzen sitzen im allgemeinen die Enden fest in der Umfangswand des Kolbens oder in Innenansätzen oder -augen dieser Umfangswand, während das Pleuelende auf dem Kolbenbolzen schwenkbar gleitgelagert ist; die später angegebenen Nachteile gelten aber auch entsprechend in dem eventuellen umgekehrten Fall. Dieses Lager ist am stärksten belastet, wenn während der Hübe der Höchstdruck im Verbrennungsraum erreicht wird.

Die hohe Belastung bewirkt, daß der Kolbenbolzen entsprechend durchgebogen und das Lager nicht mehr gleichmäßig belastet wird. Es tragen dann hauptsächlich die Kanten des Lagers bzw. die Lagerkanten des Pleuelendes. Diese Durchbiegung ist einer der Gründe, die einer Leistungssteigerung des Motors entgegenstehen. Zu starke Durchbiegung hat zur Folge, daß der Ölfilm herausgequetscht wird, was zu unzulässig hohem Verschleiß führt.

Aufgabe gemäß der Erfindung ist es, solche Nachteile zu vermeiden oder zu vermindern.

Diese Aufgabe wird erfindungsgemäß durch das Kennzeichen des Anspruchs 1 gelöst.

Der Kolbenbolzen ist also am Kolben nicht nur über seine Enden abgestützt, sondern noch über mindestens eine Zwischenabstützung; die Endabstützungen und die Zwischenabstützung oder -abstützungen sind kolbengebunden. Durch die Erfindung kann die Durchbiegung des Kolbenbolzens zumindest in erträglichen Grenzen gehalten werden, und es steht einer Erhöhung der spezifischen Leistung des Motors von dieser Seite her nichts entgegen. Es verteilt sich die zu übertragende Kraft auf zwei bzw. mehr als zwei Kraftübertragungsglied- bzw. Pleuel-Angreifgebiete oder -Lager, so daß die Durchbiegung des Kolbenbolzens vermindert wird und höhere Kräfte auf den Kolbenbolzen bzw. höhere Lagerkräfte möglich werden. Eine einzige genannte Zwischenabstützung und ein einziger genannter beidseitiger Angriff des Pleuels oder dgl. stellen die bevorzugte Ausführung dar.

T-657
15.06.1981

Vorteilhafte Ausbildungen und Weiterbildungen der Erfindung sind insbesondere in den Unteransprüchen aufgeführt.

Von den Ausbildungen gemäß dem Anspruch 2 ist die mit
der von der Kolbenumfangswand getragenen Zwischenabstützeinrichtung die vorteilhaftere, weil diese Zwischenabstützung im Gegensatz zu der vom Kolbenboden getragenen
einen zusätzlichen Wärmefluß vom heißen Kolbenboden in die
Lagerung des Pleuels oder dgl. bzw. Kolbenbolzens vermeidet. Wie der Anspruch 3 zeigt, stellt die Gabelung des
Endes des Pleuels oder dgl. eine einfache Bauart dar,
wobei vorzugsweise insgesamt nur zwei Arme ("Zinken")
und eine einzige Zwischenstütze, zwischen diesen, vorgesehen sind. Es können aber auch z.B. insgesamt drei Arme
und jeweils zwischen zwei derselben eine Zwischenstütze,
also insgesamt zwei Zwischenstützen, vorgesehen sein. Der
Kolben oder dessen Umfangswand und/oder Boden ist bzw.
sind im allgemeinen einteilig mit der Zwischenabstützeinrichtung. Lagerung bzw. Sitz des Pleuels oder dgl. und des
Kolbenbolzens bei Teilung des Kolbenbolzens in mindestens
zwei Teile - siehe den Anspruch 4 - sind erst durch die
mindestens eine Zwischenabstützung des Kolbenbolzens
möglich, und es wird gemäß dem Anspruch 4 der Vorteil erzielt, daß sich Fertigungstoleranzen bzw. -ungenauigkeiten
beim Kolbenbolzen und/oder den Bohrungen, durch die er
führt, leichter ausgleichen lassen. - Bei Lagerung des
Endes des Pleuels oder dgl. auf dem Kolbenbolzen ist also
für jede in diesem Ende befindliche Einzellagerfläche
ein eigener (separater, getrennter, besonderer) Kolbenbolzen, ein Einzelbolzen, vorgesehen.

Der Gegenstand der Erfindung läßt sich sowohl für Kolben,
Kolbenbolzen und Pleuel oder dgl. aus Metall, als auch
- siehe den Anspruch 5 - für keramische Ausführung dieser

T-657
15.06.1981

Teile anwenden, wobei dann auch die Zwischenabstützeinrichtung aus keramischem Werkstoff besteht.Bei keramischen Werkstoffen, vorzugsweise solchen wie Siliziumnitrid $Si_3N_4$ oder Siliziumkarbid SiC, ist der Gegenstand der Erfindung besonders vorteilhaft, da diese Werkstoffe auf Spannungsspitzen, wie sie an den Lagerkanten auftreten, besonders empfindlich reagieren. Solche Spannungsspitzen und solche Reaktion sind aber durch die Anwendung der Erfindung vermindert, denn durch die Erfindung ist die Durchbiegung des Kolbenbolzens vermindert. Bei keramischen Werkstoffen für die Teile des Gegenstands der Erfindung wird insbesondere gemäß dem Anspruch 4 vorgegangen, da bei ungeteiltem Kolbenbolzen möglicherweise nicht sämtliche Einzellager tragen, denn Keramik hat einen größeren Eleastizitätsmodul als die Metalle jener Teile, wodurch sich genannte Fertigungstoleranzen bzw. -ungenauigkeiten bei ungeteiltem Kolbenbolzen schlechter ausgleichen lassen als bei geteiltem Kolbenbolzen.

In der Zeichnung ist ein Ausführungsbeispiel des Gegenstands der Erfindung dargestellt.

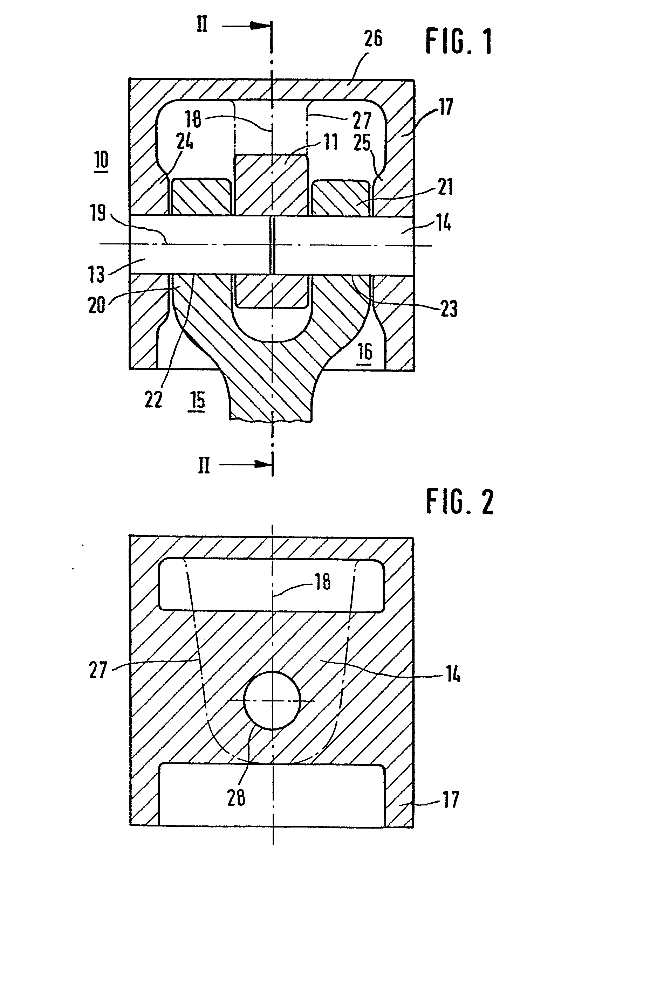

Diesen zeigt Fig. 1 in einem die Kolbenachse und die Kolbenbolzenachse enthaltenden Längsschnitt und

Fig. 2, bei ausgebautem Pleuel, in einem Längsschnitt II-II.

Der Gegenstand setzt sich aus einem zylindrischen Kolben 10, mit einer eine ebene Wand darstellenden Zwischenstütze 11, zwei Einzel(kolben)bolzen 13 und 14 und einem abgebrochen dargestellten Pleuel 15 zusammen. Vom Pleuel 15 ist im wesentlichen nur dessen kolbenseitiges Ende 16

T-657
15.06.1981

dargestellt. Die Wand bzw. Zwischenstütze 11 verläuft diametral von einer zur anderen Seite der Umfangswand 17 des Kolbens 10, ist von der Umfangswand 17 getragen und liegt in Fig. 2 in der Zeichenebene, also der Ebene des Längsschnitts II-II. Die Einzelbolzen 13 und 14 fluchten miteinander und verlaufen senkrecht durch die Zwischenstütze 11 bzw. eine entsprechende Bohrung 28 derselben und senkrecht zur Kolbenachse 18, und die Kolben- bzw. Einzelbolzenachse 19 schneidet die Kolbenachse 18. Jeder Einzelbolzen 13 bzw. 14 sitzt fest in der Umfangswand 17 und einem sie verstärkenden Innenauge 24 bzw. 25 und fest in der Zwischenstütze 11, die ihn also neben der Kolbenachse 18 abstützt. Das Pleuelende 16 ist so gegabelt, daß sich zwei Arme 20 und 21 ergeben. Diese weisen je eine Lagerbohrung 22 bzw. 23 auf, durch die der Einzelbolzen 13 bzw. 14 gesteckt ist. Es liegen zwei Pleueleinzellager (22,23) kolbenbolzenaxial nebeneinander und symmetrisch zur Ebene des Längsschnitts II-II. Das Pleuel 15 ist über die Arme 20 und 21 seines Endes 16 um die Einzelbolzen 13 und 14 schwenkbar. Es kann auch allein oder zusätzlich zur Zwischenstütze 11 eine vom Boden 26 des Kolbens 10 getragene, in der letztgenannten Ebene liegende Zwischenstütze für die Einzelbolzen 13 und 14 vorgesehen sein - siehe die strichpunktierten Linien 27. In allen Fällen kann anstelle der beiden Einzelbolzen 13 und 14 ein einziger, durchgehender Kolbenbolzen vorgesehen sein. Der Kolben 10 ist mit der Zwischenstütze 11 oder 27 oder den Zwischenstützen 11 und 27 einstückig. Bezüglich der Einzelbolzen 13 und 14 kann man auch davon sprechen, daß ein eben genannter, durchgehender Kolbenbolzen innerhalb der Zwischenstütze 11 bzw. 27 bzw. innerhalb der Bohrung 28 derselben in der letztgenannten Ebene in zwei Einzelbolzen 13 und 14 geteilt ist..

T-657
15.06.1981

wo/si

MTU MOTOREN- UND TURBINEN-UNION
MÜNCHEN GMBH


München, den 15. Juni 1981


P a t e n t a n s p r ü c h e

1. Kolben, insbesondere eines Verbrennungsmotors, mit Kolbenbolzen und dort angreifendem Kraftübertragungsglied, gekennzeichnet durch mindestens eine Zwischenabstützung des Kolbenbolzens (13,14) und einen bzw. jeweils einen dortigen beidseitigen Angriff des Kraftübertragungsglieds (16) am Kolbenbolzen (13,14).

2. Kolben mit Kolbenbolzen und Kraftübertragungsglied nach Anspruch 1, gekennzeichnet durch eine von der Umfangswand (17) und/oder dem Boden (26) des Kolbens (10) getragene Zwischenabstützeinrichtung (11,27).

3. Kolben mit Kolbenbolzen und Kraftübertragungsglied nach Anspruch 1 oder 2, gekennzeichnet durch ein gegabeltes Kraftübertragungsglied-Ende (16) auf dem Kolbenbolzen (13,14).

4. Kolben mit Kolbenbolzen und Kraftübertragungsglied nach Anspruch 1, 2 oder 3, gekennzeichnet durch einen innerhalb der Zwischenstütze (11,27) in Einzelbolzen (13,14) geteilten Kolbenbolzen.


T-657

5. Kolben mit Kolbenbolzen und Kraftübertragungsglied nach Anspruch 1, 2 oder 3, insbesondere 4, dadurch gekennzeichnet, daß der Kolben (10), mit der Zwischenabstützung bzw. -abstützeinrichtung (11,27), der Kolbenbolzen bzw. die Einzelbolzen (13,14) und das auf ihm bzw. ihnen (13,14) befindliche Kraftübertragungsglied (16) aus keramischem Werkstoff bestehen.

T-657
15.06.1981

1.1

**FIG. 1**

**FIG. 2**